# EUROPEAN PATENT SPECIFICATION

(11) **EP 3 752 660 B1**
(45) Date of publication and mention of the grant of the patent: **15.11.2023**
(21) Application number: 19714885.1
(22) Date of filing: 14.02.2019
(51) Int. Cl.: C25B 1/23, C25B 3/03, C25B 3/07, C25B 3/26, C25B 9/05, C25B 15/08, B01D 53/14

(54) **INTEGRATED ELECTROCHEMICAL CAPTURE AND CONVERSION OF CARBON DIOXIDE**
INTEGRIERTE ELEKTROCHEMISCHE ABSCHEIDUNG UND UMWANDLUNG VON KOHLENDIOXID
CAPTURE ET CONVERSION ÉLECTROCHIMIQUES INTÉGRÉES DE DIOXYDE DE CARBONE

(30) Priority: 14.02.2018 EP 18156793
(43) Date of publication of application: 23.12.2020
(73) Proprietor: Nederlandse Organisatie voor toegepast- natuurwetenschappelijk Onderzoek TNO, 2595 DA 's-Gravenhage (NL)
(72) Inventor: GOETHEER, Earl Lawrence Vincent, 2595 DA 's-Gravenhage (NL); LATSUZBAIA, Roman, 2595 DA 's-Gravenhage (NL); ANASTASOPOL, Anca, 2595 DA 's-Gravenhage (NL)
(74) Representative: V.O.
(86) International application number: PCT/NL2019/050097
(87) International publication number: WO 2019/160413

(56) References cited:
- US-A1- 2013 008 800
- US-A1- 2014 151 240
- US-A1- 2017 073 827

## Description

The invention is directed to a method for electrochemically reducing carbon dioxide, and an apparatus for performing the method.

The use of fossil fuels in activities such as electricity and heat production, agriculture and forestry, manufacturing, and transportation has made fossil fuel the primary source of carbon dioxide.

Boden et al. (Global, Regional, and National Fossil-Fuel CO2 Emissions; Carbon Dioxide Information Analysis Center, Oak Ridge National Laboratory, U.S. Department of Energy, Oak Ridge, Tennessee, USA, 2017) claim global carbon emissions from fossil fuels have significantly increased since 1900. The above-mentioned activities have contributed to approximately 90 percent carbon dioxide emission increase since the 1970s.

In recent decades effort is put into innovative technologies to circumvent recognised environmental effects caused by significant amounts of carbon dioxide being emitted in the atmosphere. Exemplary technologies encompass converting carbon dioxide to economically valuable chemical compounds, such as carbon monoxide, alcohols (*e.g.* methanol and ethanol) and carboxylic acids (*e.g.* formic acid, oxalic acid and acetic acid, or their salts). One such promising carbon dioxide conversion technique is direct heterogeneous electrochemical reduction (or electroreduction).

Electrochemical production has the economical potential to recycle carbon dioxide as an energy carrier, thereby reducing its accumulation in the atmosphere, and storing energy in high value and high energy density (chemical) form.

Industries face several further obstacles when converting carbon dioxide. One of which is poor selectivity, the low product selectivity is the result of inappropriate adsorption energies of carbon dioxide reduction intermediates on a catalyst surface. Secondly, poor current (or Faradaic) efficiencies are encountered, because of competitive hydrogen evolution reaction (HER), which takes place in the same range of the potentials as the reduction of carbon dioxide. Most catalysts reported so far in literature exhibit a high overpotential for the reduction reaction, which significantly reduces energy efficiency of the process (Kortlever et al., J. Phys. Chem. Lett. 2015, 6(20), 4073-4082).

Besides further developing catalysts, another way to improve the conversion process of carbon dioxide is to increase its concentration in the electrolyte. In other words, an economically feasible electrochemical conversion of carbon dioxide can be accomplished by utilising high concentration carbon dioxide sources.

The majority of electroreduction processes of carbon dioxide is performed under aqueous conditions containing various salts to improve the electrical conductivity, and to increase the carbon dioxide content. However, water solubility of carbon dioxide is relatively low.

Current electroreduction technologies embody elaborate processes, consisting of multiple sequential steps. These steps concern carbon dioxide capture, carbon dioxide release followed by purification, and recovery of the carbon capture solvent, solubilising carbon dioxide in aqueous, organic or inorganic electrolyte, and electrochemically converting the solubilised carbon dioxide to high value-added chemicals. This process can be made more efficient by omitting the carbon dioxide release and purification steps, and using an electrolyser to directly react solubilised carbon dioxide from the capture solvent.

Methods for capturing carbon dioxide may include the use of chemical or physical solvents, or hybrids thereof. Common encountered chemical solvent systems are aqueous and comprise ethanolamines (*e.g.* monoethanolamie, *N*-methyldiethanolamine and diglycolamine). These species chemically react with carbon dioxide to form carbamates. An example of direct electrochemical reduction of CO₂ from monoethanolamine, by reducing formed carbamates reported by Chen et al. (ChemSusChem 2017, 10(20), 4109-4118).

Additionally, common encountered chemical solvent systems also include aqueous solution of 2-amino-2-methyl-1-propanol (AMP), tertiary amine methyldiethanolamine (MDEA), and ammonia (NH₃), which form bicarbonates upon loading with CO₂.

US-A-2014/0 151 240 relates to chemical absorption of carbon dioxide and its electrochemical conversion. The process of absorbing carbon dioxide and electrochemically converting it is performed under atmospheric pressure.

US-A-2013/0 008 800 relates to the electrochemical conversion of carbon dioxide captured with chemical solvents. The reactive uptake of carbon dioxide by forming chemical intermediates and the subsequent electroreduction are not performed under elevated pressure.

US-A-2017/0073827 relates to a producing system of a reduction product of carbon dioxide.

Heat is applied to regenerate chemical solvents. A further disadvantage of using chemical solvents is their corrosiveness. While chemical solvents appear to be favoured with low partial pressure of carbon dioxide, physical solvents become more practical and economically desirable at elevated partial pressures.

The absorption limit plays an important role, and is dependent on the vapour-liquid equilibrium of the mixture, which is governed by the pressure and temperature. At high carbon dioxide partial pressure, the carbon dioxide loading capacity of the solvent is higher for physical solvents than for chemical solvents. A further advantage of using physical solvents is that they can be stripped of absorbed substances by simply reducing the pressure. Some examples that use physical solvents in electroreducing carbon dioxide include the following.

For example, Tory et al. (ChemElectroChem 2015, 2(2), 213-217) report the electrochemical reduction of carbon dioxide by using the scrubbing solvent used in the Purisol^{™} process (*N*-methyl-2-pyrrolidone). No suggestions are made as to whether the electroreduction of carbon dioxide can be performed at high pressure, nor do Tory *et al.* connect an electrochemical cell to an absorber unit.

Shi et al. (Electrochimica Acta 2017, 240, 114-121) report the conversion of carbon dioxide into carbon monoxide by means of electroreduction. Herewith, Shi *et al.* use the solvent of the Fluor^{™} process (propylene carbonate), in combination with tetrabutylammonium perchlorate. In addition hereto, water is desirable as its presence is considered advantageous to conductivity and the solubility of carbon dioxide. No suggestions are made as to whether the electroreduction of carbon dioxide can be performed at high pressure, nor do Shi *et al.* connect an electrochemical cell to an absorber unit.

Saeki et al. (J. Phys. Chem. 1995, 99(20), 8440-8446) report the electrochemical reduction of carbon dioxide with high current density (rate of reduction) in an aqueous methanol system. According to Saeki *et al.,* operating pressures above 20 bar do not significantly contribute to the reduction rate of carbon dioxide.

Kaneco et al. (Fuel Chemistry Division Preprints 2002, 47(1), 71-72) report the electrochemical reduction of carbon dioxide to methane under aqueous conditions, and combining it with the technology of the Rectisol^{™} process. Methanol is used as the capture solvent, and the operating temperature is near 0 °C, because of beneficial behaviour of the capture solvent. The low operating temperature impedes the electrochemical reduction of carbon dioxide. Therefore, the process requires additional temperature steps and process units to obtain methane. In addition, Kaneco *et al.* do not report pressure as a process parameter, nor are other physical solvents suggested.

Another physical solvent one may encounter in capturing carbon dioxide from gas streams is the one used in the Selexol^{™} process. This process deploys a mixture of dimethyl ethers of polyethylene glycols (DPEG). The Selexol^{™}, Coastal AGR^{®} or Genosorb^{®} solvents are known for their property to reach significant levels of carbon dioxide loading at elevated partial pressures.

Besides chemical solvents and physical solvents, one may encounter hybrid systems comprising a combination of chemical and physical solvents. Suitable examples are Sulfinol^{®} and Amisol^{®}. However, electrochemical reduction processes of carbon dioxide do not appear to be known with such hybrid systems.

There is a need to develop an economically viable process and method for reducing carbon dioxide emissions, and converting the captured carbon dioxide into useful chemical compounds. Herewith, it is desirable to find other processes, or alter and intensify current processes, that are less expensive and more (energy) efficient, require less operational units, i.e. no carbon dioxide release and purification step of the carbon dioxide-containing gas stream, preferably use only one carbon capture solvent functioning both as a capture solvent and as an electrolyte, and tolerate high (partial) pressure. In addition, it is desirable to perform the carbon dioxide capture process and electrochemical reduction of carbon dioxide at similar pressure and temperature conditions.

An objective of the invention is to overcome one or more of the disadvantages faced in the prior art.

A further objective of the invention is to provide an energy and resource efficient method for electrochemically reducing carbon dioxide from carbon dioxide-containing gas streams.

Yet a further objective of the invention is to provide a cost efficient method for capturing and electrochemically reducing carbon dioxide by process intensification, wherewith capital investments are reduced without sacrificing production rates.

Yet a further objective of the invention is to provide a method for capturing carbon dioxide with a capture solvent wherein the carbon dioxide is directly electrochemically reduced in the sense that it is physically dissolved so that it can react directly, resulting in significantly reduced process time and process costs.

Yet a further objective of the invention is to provide a method for electrochemically reducing carbon dioxide from carbon dioxide-containing gas streams, wherewith the carbon dioxide is absorbed to a physical solvent and/or a chemical solvent.

Yet a further objective of the invention is to provide an apparatus, wherewith a cost and energy efficient method for capturing carbon dioxide from carbon dioxide-containing gas streams and electrochemically reducing the captured carbon dioxide from a carbon dioxide-rich capture solvent at elevated absolute pressure can be performed.

The inventors found that one or more of these objectives can, at least in part, be met by situating an electrochemical cell after an absorber unit, and by employing a high pressure carbon dioxide-containing gas stream.

Accordingly, in a first aspect the invention provides a method for electrochemically reducing carbon dioxide as defined in claim 1.

In a second aspect the invention provides an apparatus as defined in claim 13.

In accordance with the invention, carbon dioxide is captured by a capture solvent and electrochemically reduced from a carbon dioxide-rich capture solvent without having to lower the operating absolute pressure.

The capture and electrochemical reduction of carbon dioxide can advantageously be performed with the same fluid medium. The invention further allows to electrochemically convert carbon dioxide to valuable chemical compounds. Additionally, in accordance with the invention separation and collection of the valuable chemical compounds is more easily achieved than from water. Furthermore, the capture and reduction of carbon dioxide according to the invention requires fewer operational units, by which lower capital investment is required. The carbon dioxide-containing gas stream does not need to be purified.

Carbon dioxide capture and reduction at elevated absolute pressures allow for high current density, which results in lower capital investments required. The invention overcomes poor current densities. In addition, with the invention poor current efficiencies are overcome, as well as known stability issues related to chemical solvents. By keeping the process under elevated absolute pressure, the carbon dioxide concentration is high throughout the process which results in the highly concentrated production of valuable chemical compounds upon electrochemical conversion of the carbon dioxide.

The capture of carbon dioxide by a capture solvent and electrochemical reduction of the absorbed carbon dioxide advantageously results in a cost, energy, and resource efficient process.

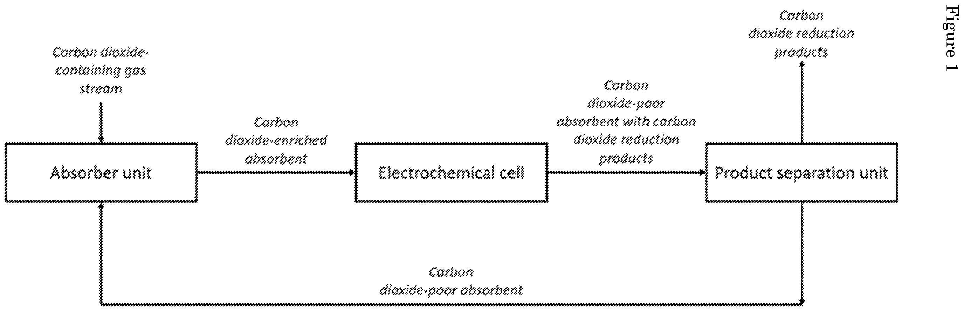

Steps a)-e) are schematically illustrated in detail in the flowchart of figure 1.

A carbon dioxide-containing gas stream is brought into contact with a capture solvent, thereby absorbing carbon dioxide from the carbon dioxide-containing gas stream to form a carbon dioxide-rich capture solvent. The expression "contact" as used herein is meant to include causing the carbon dioxide-containing gas stream to physically and/or chemically connect with the capture solvent. In an embodiment, contact between the carbon dioxide-containing gas stream and the capture solvent can be achieved by imposing a flow or feed of the carbon dioxide-containing gas stream through a connector, such as piping, to a unit, such as an absorber unit, which may comprise the capture solvent.

The expression "arranged to" as used herein is interchangeable with the expression "constructed to" or "configured to". The expression specifies that part of an apparatus, or the entire apparatus, is put together in such a way that it is able to perform a certain function, and/or is structurally and mechanically build to withstand certain conditions, such as elevated pressure.

The expression "capture solvent" as used herein is meant to include a solvent, solvent mixture, absorbent, absorbent mixture, absorbent solvent, and/or absorbing solvent capable of absorbing, capturing, adhering, uptaking and/or including carbon dioxide. The expression also covers reactive processes, wherewith the capture solvent physically absorbs and/or chemically reacts, forming chemical bonds.

A carbon dioxide-containing gas stream may be obtained from any suitable source, such as from a pre-combustion process, a combustion exhaust gas or flue gas of a combustion process, from a natural gas stream including associated gas, from a biogas stream, from synthesis gas, and/or from a carbon dioxide exhaust of for example a fermentative ethanol production plant. Suitable examples of combustion processes include steam methane reforming (SMR), blast furnaces, and air-fired or oxygen-enhanced fossil fuel combustion processes such as power plants, diesel engines, natural gas engines including combined heat and power plants (CHP), waste incineration plants. Additionally industrial waste gasses from cement factories containing high amounts of carbon dioxide can be used.

The carbon dioxide-containing gas stream may comprise 3-90 % by total volume of the gas stream of carbon dioxide. Preferably the carbon dioxide-containing gas stream comprises 8-85 vol.% of carbon dioxide. Other components that may be contained within the carbon dioxide-containing gas stream include, for example, other combustion by-products, such as water, methane, nitrogen, oxygen, argon, carbon monoxide, sulphur oxides, hydrogen sulphide, and/or nitrogen oxides.

The carbon dioxide-containing gas stream may be treated to remove contaminants or impurities that would negatively affect the invention. Furthermore, moisture or water may be present in the carbon dioxide-containing gas stream. The presence of moisture or water may contribute positively to electrical conductivity.

Depending upon the source of the carbon dioxide-containing gas stream, it may require compression, for example by means of one or more compressors, to an absolute pressure of 20-200 bar. The absolute pressure of the carbon dioxide-containing gas stream is 20 bar or more, preferably 30 bar or more, 40 bar or more, 50 bar or more, 60 bar or more, 70 bar or more, 80 bar or more, 90 bar or more, 100 bar or more, 110 bar or more, 120 bar or more, 130 bar or more, 140 bar or more, 150 bar or more, 160 bar or more, 170 bar or more, 180 bar or more, 190 bar or more, or 200 bar. An absolute pressure below 20 bar may result in a too low carbon dioxide concentration, wherewith the process efficiency may be adversely affected. At absolute pressures of 60 bar or more carbon dioxide may be liquid at room temperature. Liquid carbon dioxide may not adversely affect the absorption of carbon dioxide. Carbon dioxide at absolute pressures above 70 bar and temperatures above 30 °C may result in its supercritical state. Absolute pressures above 200 bar may require the process parts to be further fortified in order to handle such pressures. More preferably, the absolute pressure of the carbon dioxide-containing gas stream is 20-180 bar, more preferably 30-150 bar, such as 40-140 bar. In particular, the absolute pressure of the carbon dioxide-containing gas stream is maintained throughout the absorption process and electrochemical reduction process. As a possible result, no (additional) pressure swing adsorption units are required. According to the ideal gas law, elevated temperatures require the pressure to be elevated as well.

The temperature in the electrochemical cell during the method of the invention is preferably 0 °C or more. A temperature below 0 °C may adversely affect the conversion of carbon dioxide to a reduced carbon dioxide product or product mixture. In particular, the temperature may be 100 °C or less, 90 °C or less, 80 °C or less, 70 °C or less, 60 °C or less, 50 °C or less, 40 °C or less, 30 °C or less, 20 °C or less, or 10 °C or less. Temperatures of 0-20 °C may adversely affect the absorption process and/or mass transport as the viscosity of capture solvent may increase. When the temperature is more than 70 °C, the partial pressure of carbon dioxide may increase significantly, because of reduced solubility. Herewith, the electrochemical cell may be fortified to cope with elevated pressures. In addition, temperatures of 80-100 °C may adversely affect semi-permeable separator integrity and/or selectivity. Preferably the temperature is 20 °C or more, and 70 °C or less. A temperature of approximately 20 °C or more may not require active cooling of the electrochemical cell nor of the carbon dioxide-rich capture solvent. When the moisture or water content in the capture solvent is low, temperatures of 20 °C and above may result in increased reaction kinetics and mass transport. When water is mixed with the capture solvent to improve electrical conductivity, the optimum temperature may be 60 °C. The optimum temperature may depend on the composition of present catalysts and/or the composition of the capture solvent used. Above the optimum temperature the current efficiency of carbon dioxide reduction may be reduced, while the current efficiency of hydrogen gas production is increased. This may result in a lower overall process efficiency.

The carbon dioxide-containing gas stream is brought in contact with a capture solvent. This process may be performed in a unit, such as an absorber unit. The capture solvent may selectively absorb and/or chemically react with carbon dioxide. Contaminants, impurities and/or components other than carbon dioxide present in the carbon dioxide-containing gas stream may as well be absorbed to and/or reacted with the capture solvent. All components present in the carbon dioxide-containing gas stream, that do not absorb or react to the capture solvent nor occupy void spaces within the unit or pre-unit piping, may be collected and/or vented.

Carbon dioxide from the carbon dioxide-containing gas stream is absorbed by a capture solvent. The carbon dioxide from the carbon dioxide-containing gas stream may chemically react with a capture solvent. The capture solvent may comprise a chemical solvent, a mixture of chemical solvents, a physical solvent, a mixture of physical solvents, or a mixture of chemical and physical solvents (*i.e.* hybrid systems). An aqueous physical solvent is a mixture, *e.g.* a solution, of water and a physical solvent. Preferably, the capture solvent comprises a physical solvent or a mixture thereof selected from the group consisting of (various) dimethyl ethers of polyethylene glycol, *N*-methyl-2-pyrrolidone, methanol, and propylene carbonate and/or a hybrid system or a mixture thereof selected from the group consisting of a mixture of diisopropylamine or dimethylethanolamine, water and tetrahydrothiopene or diethylamine, and a mixture of methanol and monoethanolamine, diethanolamine, diisopropylamine or diethylamine. In particular, various dimethyl ethers of polyethylene glycol, methanol, propylene carbonate, or a mixture thereof are preferred, or a mixture of diisopropylamine or dimethylethanolamine, water and tetrahydrothiopene or diethylamine, and a mixture of methanol and monoethanolamine, diethanolamine, diisopropylamine or diethylamine, or a mixture thereof are preferred. More preferred are dimethyl ethers of polyethylene glycol, methanol, propylene carbonate or a mixture thereof, and most preferred are dimethyl ethers of polyethylene glycol.

At least part of the carbon dioxide-rich capture solvent is introduced into the cathode compartment of an electrochemical cell. Preferably, all of the carbon dioxide-rich capture solvent is introduced into the cathode compartment of the electrochemical cell.

The cathode compartment of an electrochemical cell may comprise a cathode material, a catholyte (*i.e.* an electrolyte present in a cathode compartment) and/or a salt.

Within the electrochemical cell the anode and cathode are separated from each other by a semi-permeable separator. In order to improve the mechanical properties of the electrochemical cell, the semi-permeable separator may be mechanically supported. The semi-permeable separator may generally be an ion exchange membrane or a size exclusion membrane. The ion exchange membrane may permit the exchange of ions between the cathode compartment and an anode compartment and/or between one of these compartments with the ion exchange membrane.

The electrochemical cell may be designed as such that the semi-permeable separator is pressed against the cathode and the anode in order to minimise electrical resistance.

The cathode structure may also include two or more different catalyst compositions that are either mixed or located in separate regions of the cathode structure in the cathode compartment. The cathode structure may comprise one or more selected from the group consisting of platinum, palladium, rhodium, osmium, gold, silver, titanium, copper, iridium, ruthenium, lead, nickel, cobalt, zinc, cadmium, tin, iron, gallium, thallium, indium, antimony, and bismuth, oxides and/or alloys thereof, mixed metal oxides, dimensionally stable electrode (DSA^{®}), stainless steel, brass, and carbon-based graphitic electrode. The preferred cathode structure to electrochemically reduce carbon dioxide to carbon monoxide comprises one or more selected from the group consisting of copper, tin, lead, gold, and silver, oxides and/or alloys thereof, and molecular catalysts, such as porphyrins of various metals. The catalyst may be present in the form of nanostructures, such as, nanoparticles and/or nanorods. In addition, the catalyst may be structured as a foam, felt and/or mesh.

In a preferred embodiment, the cathode comprises an electronically conducting metal electrocatalyst. Such an electrocatalyst may be ionic and is suitably capable of providing adsorption sites for carbon dioxide and its reduction intermediates to react and produce carbon dioxide reduction products.

For the electrochemical reduction of carbon dioxide, the cathode may comprise a coating or combination of coatings in a single or plurality of layers on the cathode. When a coating or a combination of coatings is present on the cathode, electrochemical reactions may not be inhibited. In time, when the electrode has lost part of its coating, the electrode may be regenerated with subsequent recoating applications. The coating may comprise one or more species selected from the group consisting of alkali metals, alkaline earth metals, lanthanides, actinides, transition metals, post-transition metals, metalloids, oxides and/or alloys thereof, mixed metal oxides, and ion-conductive polymers. An example of such an ion-conductive polymer is sulfonated tetrafluoroethylene-based fluoropolymer-copolymer. The coating may typically be a very thin layer of several micrometers thick.

Depending on the conductivity of the capture solvent, the electrochemical cell may require additional electricity conducting chemical substance (*i.e.* electrolyte). The electrolyte in the cathode compartment may be different to the electrolyte in the anode compartment. The expression "electrolyte" as used herein is meant to include the capture solvent.

The cathode compartment of the electrochemical cell may comprise a fluid catholyte. In particular, the fluid catholyte is preferably liquid or gaseous, and most preferably the fluid catholyte is liquid. A suitable example of a catholyte may be the capture solvent of steps a)-e). Preferably, the catholyte or catholyte mixture is free of contaminants and other impurities. By introducing at least part of the carbon dioxide-rich capture solvent into the cathode compartment, in the absence of another catholyte in the cathode compartment, the production of undesirable by-products can be circumvented.

Other catholytes may be used as well, though, is not preferred. These may be selected from the group consisting of water, acetone, sulpholane, dimethylsulphoxide, tetrahydrofuran, dimethylformamide, N-methyl-2-pyrrolidone, hexamethylphosphoramide, acetonitrile, dichloromethane, propylene carbonate, pyridine, hexafluoro-2-propanol, ionic liquids comprising 1-butyl-3-methylimidazolium and hydrogen sulphate, trifluoroacetate, dihydrogen phosphate, chloride, nitrate, tetrafluoroborate, triflate and/or hexafluorophosphate, or mixtures thereof.

At least one salt in a non-aqueous solution or at least one salt in an aqueous solution may be added to the cathodic compartment to improve electrical conductivity. The salt may be added to the catholyte prior to the carbon dioxide-rich capture solvent entering the electrochemical cell.

It is preferred that if a catholyte other than the capture solvent is selected, the catholyte comprises an acid such as an organic and/or inorganic acid. An inorganic acid may be preferred since, compared to organic acids, inorganic acids may be more inert in the electrochemical (oxidation) reaction in the cathode compartment. The inorganic acid may be selected from the group consisting of hydrochloric acid, carbonic acid, nitric acid, phosphoric acid, sulfuric acid, boric acid, hydrofluoric acid, hydrobromic acid, perchloric acid, hydroiodic acid or a mixture thereof.

The acid may preferably be added in the form of a salt. The salt may be obtained by adding one or more basic compounds to the acid. Suitable examples of basic compounds comprise alkali metal, and carbonate, bicarbonate, hydroxide and/or sulphate. The basic compound may be selected from the group consisting of lithium hydroxide, sodium hydroxide, potassium hydroxide, rubidium hydroxide, caesium hydroxide, magnesium hydroxide, and calcium hydroxide.

When the moisture or water content is low in the cathode compartment and/or in the carbon dioxide-rich capture solvent, one or more salts may be added that are soluble under non-aqueous conditions. Suitable examples of such salts comprise hexafluoroarsenate, perchlorate, tetrafluoroborate, hexafluorophosphate, trifluoromethanesulphonate, *bis*(trifluoromethylsulphonyl)amide, and/or bis(trifluoromethylsulphonyl)methide.

The catholyte may be operated during the method of invention at a temperature between -10 and 95 °C. Temperatures of less than -10 °C may limit the use of catholytes because of their freezing points. In particular, the temperature may be 90 °C or less, 80 °C or less, 70 °C or less, 60 °C or less, 50 °C or less, 40 °C or less, 30 °C or less, 20 °C or less, 10 °C or less, 5 °C or less, or 0 °C or less. The solubility of carbon dioxide tends to increase upon lowering the temperature, resulting in improved carbon dioxide conversion and current efficiencies. A drawback of temperatures below 0 °C is that the operating cost may increase because of elevated electrochemical cell voltages. Temperatures of 70 °C and more may adversely affect the solubility of carbon dioxide and semi-permeable separator integrity and/or selectivity in the electrochemical cell. Preferably the operating temperature of the catholyte is 5 °C or more and 60 °C or less. When the temperature is above 60 °C, the catholyte may require cooling by means of for example an external heat exchanger. By using the heat exchanger, part of the catholyte will be cooled using cooling water, wherewith the temperature of the catholyte can be controlled.

The anode compartment of an electrochemical cell may comprise an anode material, an anolyte (an electrolyte present in an anode compartment) and/or a salt.

The anode structure may also include two or more different catalyst compositions that are either mixed or located in separate regions of the anode structure in the anode compartment. The anode structure and/or catalyst compositions may comprise the material as mentioned above, concerning the cathode material and the catalyst compositions.

The anode compartment of the electrochemical cell may comprise a fluid anolyte. In particular, the fluid anolyte is preferably liquid or gaseous, and most preferably the fluid anolyte is liquid. At least one salt in a non-aqueous solution or at least one salt in an aqueous solution may be added to the anodic compartment to improve electrical conductivity. The anolyte may comprise the one or more mineral acids, one or more basic compounds, one or more resulting salts, and/or one or more salts that are soluble under non-aqueous conditions as mentioned above, concerning the catholyte.

The method of the invention may be operated in batch, semi-continuously, or continuously. Batch processing has a lower risk of failure and is characterised by long reaction times, yet, lower production rates are a result. Continuous processing may be more efficient and lucrative, as products may be obtained in significantly larger amounts and require lower operating costs. It is preferred to perform the method of the invention in a continuous manner.

A sufficient electrical potential between an anode and a cathode in an electrochemical cell is applied for the cathode to reduce carbon dioxide into a reduced carbon dioxide product or product mixture in the carbon dioxide-rich capture solvent, thereby providing a carbon dioxide-poor capture solvent. In particular, the electrical potential may be 0-5 V based on the anode-cathode difference in cell voltage. When the electrical potential is above 5 V, the electrochemical reduction may not be economically viable. Preferably, the electrical potential is 1 V or more, or 3 V or more. The electrical potential can, for example, be 0-2 V.

The reduced carbon dioxide product or product mixture may comprise one or more components selected from the group consisting of alkanes, alkenes, carbon monoxide, carboxylic acids or their salts, alcohols, aldehydes, and ketones. More specifically, the reduced carbon dioxide product or product mixture may comprise one or more components selected from the group consisting of carbon monoxide, methane, ethane, ethylene, methanol, formic acid (or an ionic form thereof, such as formate), and acetaldehyde. Preferably, the reduced carbon dioxide product or product mixture comprises one or more selected from the group consisting of carbon monoxide, methanol, formic acid (or an ionic form thereof, such as formate), and acetaldehyde. Most preferred reduced carbon dioxide product is carbon monoxide. By controlling the electrical potential between the anode and the cathode in the electrochemical cell, the desired product or products may be obtained. It is further preferred that the reduced carbon dioxide product or product mixture is gaseous (such as gaseous carbon monoxide, methane or ethylene). This gives the advantage in that separation of the product is easier as compared to the separation of liquid reduction products.

A carbon dioxide-poor capture solvent is provided after the reduction of carbon dioxide from the carbon dioxide-rich capture solvent. The carbon dioxide-poor capture solvent can have a carbon dioxide content of 75 % or less by total volume of the carbon dioxide-poor capture solvent. A carbon dioxide content of more than 75 vol.% may adversely affect the cost and energy efficiency of the method of the invention. In addition, a carbon dioxide content of more than 75 vol.`% may be the result of one or more deficiencies occurring during the process. The carbon dioxide content of the carbon dioxide-poor capture solvent is preferably 60 vol.% or less, 50 vol.% or less, 40 vol.% or less, 30 vol.% or less, 20 vol.% or less, 10 vol.% or less, 8 vol.% or less, 5 vol.% or less, or 2 vol.% or less. When the carbon dioxide volume percentage is 40 vol.% or more the cost and energy efficiency of the method of the invention may be adversely affected. Preferably, the carbon dioxide content of the carbon dioxide-poor capture solvent is 10 vol.% or less.

By analogy, it is preferred that 25 % or more of the (captured) carbon dioxide by total volume of the carbon dioxide in the carbon dioxide-rich capture solvent reacts to carbon dioxide reduction products, preferably 40 % or more, such as 50 % or more, 60 % or more, 70 % or more, 80 % or more, 90 % or more, 92 % or more, 95 % or more, or 98 % or more.

With the method of the invention, remaining carbon dioxide in the carbon dioxide-poor capture solvent may optionally be recirculated to the absorber unit. Thus, at least part of the carbon dioxide-poor capture solvent may optionally be recirculated, such as to an absorber unit. Herewith, recirculated carbon dioxide-poor capture solvent may be brought into contact with a carbon dioxide-containing gas stream and carbon dioxide-rich capture solvent. The recirculated carbon dioxide-poor capture solvent may uptake carbon dioxide and become carbon dioxide-rich capture solvent.

The temperature in the electrochemical cell may preferably be 0 °C or more.

The invention further provides an apparatus as defined in claim 13.

The absolute pressure within the absorber unit is preferably 20 bar or more and 138 bar or less.

Preferably, the electrochemical cell comprises one or more electrodes that are heated to cause a local release of carbon dioxide at the electrode of the electrochemical cell. In accordance with this preferred embodiment, carbon dioxide release will take place in the electrochemical cell, and as soon as it is released it reacts on the electrode. This allows to obtain a high concentration of gaseous carbon dioxide locally at the electrode.

The absorber unit is preferably arranged to withstand an absolute pressure of the carbon dioxide-containing gas stream of 20 bar or more and 180 bar or less.

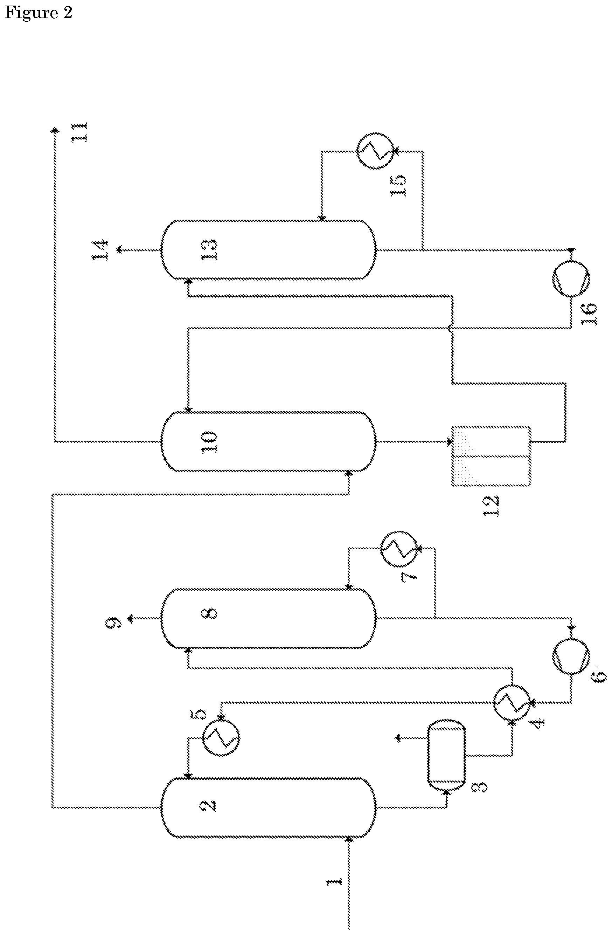

An exemplary embodiment of an apparatus of the invention is illustrated in figure 2. Herein, a gas inlet 1 is able to introduce a gas stream into a hydrogen sulphide absorber 2. The gas stream may be pre-treated by removing solids and undesirable free liquids by means of a filter or a separator located before the gas inlet. The gas stream may also be dehydrated and cooled to an adjustable temperature after the pre-treatment, yet, before the gas inlet. Hydrogen sulphide is absorbed by an absorbent inside the hydrogen sulphide absorber, wherein the gas stream is flowing upward in counter-current with an absorbent, resulting in a hydrogen sulphide-rich absorbent. The hydrogen sulphide-rich absorbent flows to a flash tank 3, where the absolute pressure is adjusted. A rich-lean exchanger unit 4 separates the hydrogen sulphide-rich absorbent from hydrogen sulphide-poor absorbent and absorbent. The hydrogen sulphide-poor absorbent is cooled down before entering the absorber by means of a heat exchanger 5. The hydrogen sulphide-rich absorbent is fed into a hydrogen sulphide generator 8, Herein, the hydrogen sulphide is desorbed from the hydrogen sulphide-rich absorbent by elevating the temperature by means of steam 7, and hydrogen sulphide-rich acid gas is collected 9. Hydrogen sulphide-poor absorbent and absorbent are led back to the rich-lean exchanger unit and hydrogen sulphide absorber by means of a pump 6. A carbon dioxide-containing gas stream, comprising no or little amount of hydrogen sulphide, is led into a carbon dioxide absorber 10 from the hydrogen sulphide absorber. Carbon dioxide is absorbed by an absorbent inside the carbon dioxide absorber, wherein the gas stream is flowing upward in counter-current with an absorbent, resulting in a carbon dioxide-rich absorbent. The resulting gas stream 11, removed of most of the hydrogen sulphide and carbon dioxide, is collected. If the stream contains methane or other commercial gases the collected gas stream may be sent for sales. The carbon dioxide-rich absorbent is led into an electrochemical cell 12, wherein carbon dioxide is electrochemically converted, resulting in a reduced carbon dioxide product or product mixture, and carbon dioxide-poor absorbent. In the embodiment of figure 2, carbon dioxide-poor absorbent and the reduced carbon dioxide product or product mixture are led into a gas stripper unit 13. When the carbon dioxide reduction product are liquid or solid products, a different separation unit can be used. In the gas stripper, the carbon dioxide-poor absorbent is separated from the reduced carbon dioxide product or product mixture. The carbon dioxide-poor absorbent is led back to the carbon dioxide absorber by means of a pump 16. The reduced carbon dioxide product or product mixture is stripped by adjusting the temperature by means of steam 15 and are collected 14.

In operation, the capture solvent absorbs carbon dioxide from the carbon dioxide-containing gas stream in the absorber unit. Carbon dioxide-rich capture solvent is discharged, or introduced, into the electrochemical cell via a connection, for electrochemical reduction of the carbon dioxide. Thus, the electrochemical cell is arranged to electrochemically reduce carbon dioxide from the capture solvent.

The electrochemical cell comprises at least two compartments separated by a semi-permeable separator. Reference above-mentioned semi-permeable separator as part of the method provided by the invention. The compartments may comprise a cathode compartment and/or an anode compartment. The semi-permeable separator may also be regarded as a compartment of the electrochemical cell.

Depending upon the source of the carbon dioxide-containing gas stream, it may require compression, for example by means of one or more compressors, to obtain an absolute pressure from 20-200 bar in the absorber unit and electrochemical cell. The carbon dioxide-containing gas stream may be fed into an absorber unit under pressure. Thus, the absorber unit is arranged to receive carbon dioxide-containing gas stream under pressure. Preferably, the absolute pressure of the carbon dioxide-containing gas stream is 20 bar or more, 30 bar or more, 40 bar or more, 50 bar or more, 60 bar or more, 70 bar or more, 80 bar or more, 90 bar or more, 100 bar or more, 110 bar or more, 120 bar or more, 130 bar or more, 140 bar or more, 150 bar or more, 160 bar or more, 170 bar or more, 180 bar or more, 190 bar or more, or 200 bar. An absolute pressure below 20 bar may result in a too low carbon dioxide concentration, wherewith the process efficiency may be adversely affected. Absolute pressures above 200 bar may require apparatus parts belonging to the absorber unit and/or electrochemical cell to be further fortified in order to handle such pressures. More preferably, the absolute pressure of the carbon dioxide-containing gas stream is 20 bar or more and 180 bar or less, even more preferably 20 bar or more and 150 bar or less, and most preferably 20 bar or more and 140 bar or less.

The apparatus may further comprise a separation unit, such as a stripper unit, connected to the electrochemical cell. In the stripper unit, the reduced carbon dioxide product or product mixture is collected from the carbon dioxide-poor capture solvent, which is provided by a connection with the electrochemical cell. The carbon dioxide-poor capture solvent may optionally be recirculated to the absorber unit. Thus, the absorber unit may be arranged to receive recirculated carbon dioxide-poor capture solvent. In case of gaseous products, preferably the separation unit is a stripper unit, whereas in case of non-gaseous products separation units, such as an extractor or a crystalliser, may be used.

The invention has been described by reference to various embodiments, and methods. The skilled person understands that features of various embodiments and methods can be combined with each other.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e*., meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. Also, all ranges include any combination of the maximum and minimum points disclosed and include any intermediate ranges therein, which may or may not be specifically enumerated herein.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein.

For the purpose of clarity and a concise description features are described herein as part of the same or separate embodiments, however, it will be appreciated that the scope of the invention may include embodiments having combinations of all or some of the features described. The invention will be further illustrated by the following non-limiting example.

### Example

The electrochemical reduction of carbon dioxide to carbon monoxide was performed at an elevated absolute pressure of 20 bar in a filter press type reactor. Inside the reactor, a silver plate anode (100 cm²) and a platinum plate cathode (100 cm²) were installed. Both electrodes were separated from each other by use of an activated proton exchange membrane (Nafion^{®} 117), thereby forming two compartments (*i.e.* an anodic and cathodic compartment). The anolyte was 0.5 liter 0.5 M H₂SO₄ (in MilliQ/Millipore water), whereas the catholyte was a 2 wt.% of 1-butyl-3-methylimidazolium trifluoromethanesulfonate (BMIM Otf) in propylene carbonate with traces of water. The conductivity of the catholyte was determined at 1.87 mS/cm. The electrolytes were pumped around in the setup at a flow of 16 l/h, and the setup was checked for any leakages. After finding no leakages, the absolute pressure of a carbon dioxide-containing gas stream was set at 5 bar (80 l/h carbon dioxide-flow in) on the system and the system was checked again for leakages. This procedure was continued until an absolute pressure of 20 bar was set to the system. A gas chromatography test run was performed to check whether no air was present in the system (*i.e.* the retention times of air/nitrogen and carbon monoxide are next to each other, thus if the air/nitrogen peak is too high no carbon monoxide can be measured). A carbon dioxide-containing gas stream with an absolute pressure of 20 bar was contacted with the catholyte to form a carbon dioxide-rich capture solvent. The carbon dioxide-rich capture solvent was introduced into the cathode compartment of the electrochemical cell. After performing a successful gas chromatography test run, a cell potential of 4.5 V was applied to the electrochemical cell and the current density measured 160 mA/cm². The amount of carbon monoxide and hydrogen produced on the cathode was measured continuously with gas chromatography. The carbon monoxide concentration in the product stream was 3000 ppm carbon monoxide and 9700 ppm hydrogen (at 80 l/h carbon dioxide reactant feed). Oxygen was generated on the anode.

## Claims

1. Method for electrochemically reducing carbon dioxide, comprising:
a) contacting a carbon dioxide-containing gas stream with a capture solvent, thereby absorbing carbon dioxide from the carbon dioxide-containing gas stream to form a carbon dioxide-rich capture solvent;
b) introducing at least part of the carbon dioxide-rich capture solvent into a cathode compartment of an electrochemical cell;
c) applying an electrical potential between an anode and a cathode in the electrochemical cell sufficient for the cathode to reduce carbon dioxide into a reduced carbon dioxide product or product mixture in the carbon dioxide-rich capture solvent, thereby providing a carbon dioxide-poor capture solvent;
d) collecting the reduced carbon dioxide product or product mixture and;
e) optionally, recirculating at least part of the carbon dioxide-poor capture solvent to an absorber unit,
wherein the anode is separated from the cathode by a semi-permeable separator, thereby forming a cathodic compartment and an anodic compartment, and wherein the absolute pressure of the carbon dioxide-containing gas stream is 20-200 bar, and wherein the absolute pressure in the electrochemical cell is 20 bar or more and 138 bar or less.

2. Method according to claim 1, wherein the temperature in the electrochemical cell is 0 °C or more.

3. Method according to claim 1 or 2, wherein the carbon dioxide-containing gas stream of a) is contacted with the capture solvent in an absorber unit, and wherein the carbon dioxide is selectively absorbed by the capture solvent.

4. Method according to any one of claims 1-3, wherein the capture solvent comprises at least one physical solvent, such as at least one aqueous physical solvent, wherein the physical solvent preferably comprises one or more selected from the group consisting of dimethyl ethers of polyethylene glycol, *N*-methyl-2-pyrrolidone, methanol, and propylene carbonate.

5. Method according to claim 4, wherein the physical solvent is a mixture of various dimethyl ethers of polyethylene glycol.

6. Method according to any one of claims 1-5, wherein the capture solvent comprises at least one chemical solvent, wherein the chemical solvent preferably comprises one or more selected from the group consisting of an aqueous solution of 2-amino-2-methyl-1-propanol, tertiary amine, such as methyldiethanolamine, and ammonia.

7. Method according to any one of claims 1-6, wherein the contacting of carbon dioxide-containing gas stream with capture solvent is performed at a temperature of 0 °C or higher.

8. Method according to any one of claims 1-7, wherein each of steps a)-d) in claim 1 is performed at an absolute pressure of 20 bar or more and 138 bar or less.

9. Method according to any one of claims 1-8, wherein the reduced carbon dioxide product or product mixture comprises one or more selected from the group consisting of carbon monoxide, alkanes, alkenes, alcohols, carboxylic acids and salts thereof, such as formates, oxalates and acetates, aldehydes, and ketones.

10. Method according to any one of claims 1-9, wherein at least one salt in a non-aqueous solution is added to the cathodic compartment and/or the anodic compartment to improve electrical conductivity.

11. Method according to any one of claims 1-9, wherein at least one salt in an aqueous solution is added to the cathodic compartment and/or the anodic compartment to improve electrical conductivity.

12. Method according to any one of claims 1-11, wherein the cathode comprises an electrically conducting metal electrocatalyst.

13. Apparatus, suitable for performing the method according to any one of claims 1-12, comprising:
- an absorber unit, where the absorber unit is arranged to receive a carbon dioxide-containing gas stream under pressure, and
- an electrochemical cell connected to the absorber unit, where the electrochemical cell is arranged to electrochemically reduce carbon dioxide from a capture solvent
- optionally, a separation unit connected to the electrochemical cell,
wherein the absorber unit is arranged to withstand and to operate at an absolute pressure of 20-200 bar and the electrochemical cell is arranged to withstand and to operate at an absolute pressure of 20-138 bar, and
wherein the electrochemical cell comprises at least two compartments separated by a semi-permeable separator.

14. Apparatus according to claim 13, wherein the absorber unit is arranged to withstand and to operate at an absolute pressure of 20 bar or more and 138 bar or less.

15. Apparatus according to claim 13 or 14, wherein said electrochemical cell comprises one or more electrodes that are heated.

## Patentansprüche

1. Verfahren zum elektrochemischen Reduzieren von Kohlenstoffdioxid, umfassend:
a) Kontaktieren eines kohlenstoffdioxidhaltigen Gasstroms mit einem Abscheidelösemittel, dabei absorbierend Kohlenstoffdioxid von dem kohlenstoffdioxidhaltigen Gasstrom, um ein kohlenstoffdioxidreiches Abscheidelösemittel zu bilden;
b) Einbringen mindestens eines Teils des kohlenstoffdioxidreichen Abscheidelösemittels in eine Kathodenkammer einer elektrochemischen Zelle;
c) Anlegen eines elektrischen Potentials zwischen einer Anode und einer Kathode in der elektrochemischen Zelle, ausreichend für die Kathode, um Kohlenstoffdioxid in ein reduziertes Kohlenstoffdioxidprodukt oder eine reduzierte Kohlenstoffdioxidproduktmischung in dem kohlstoffdioxidreichen Abscheidelösemittel zu reduzieren, dabei bereitstellend ein kohlestoffdioxidarmes Abscheidelösemittel;
d) Sammeln des reduzierten Kohlenstoffdioxidprodukts oder der reduzierten Kohlenstoffdioxidproduktmischung und;
e) optional Rückführen mindestens eines Teils des kohlenstoffdioxidarmen Abscheidelösemittels an eine Absorbereinheit,
wobei die Anode von der Kathode durch einen halbdurchlässigen Separator getrennt ist, dabei bildend eine kathodische Kammer und eine anodische Kammer, und wobei der absolute Druck des kohlenstoffdioxidhaltigen Gasstroms 20-200 bar ist, und wobei der absolute Druck in der elektrochemischen Zelle 20 Bar oder mehr und 138 Bar oder weniger ist.

2. Verfahren nach Anspruch 1, wobei die Temperatur in der elektrochemischen Zelle 0 °C oder mehr ist.

3. Verfahren nach Anspruch 1 oder 2, wobei der kohlenstoffdioxidhaltige Gasstrom aus a) mit dem Abscheidelösemittel in einer Absorbereinheit in Kontakt gebracht wird, und wobei das Kohlenstoffdioxid selektiv von dem Abscheidelösemittel absorbiert wird.

4. Verfahren nach einem der Ansprüche 1 - 3, wobei das Abscheidelösemittel mindestens ein physikalisches Lösemittel umfasst, so wie mindestens ein wässriges physikalisches Lösemittel, wobei das physikalische Lösemittel vorzugsweise eines oder mehrere umfasst, ausgewählt aus der Gruppe bestehend aus Dimetylethern von Polyethylenglykol, N-Methy-2-Pyrrolidon, Methanol, und Propylencarbonat.

5. Verfahren nach Anspruch 4, wobei das physikalische Lösemittel eine Mischung aus verschiedenen Dimethylethern von Polyethylenglykol ist.

6. Verfahren nach einem der Ansprüche 1 - 5, wobei das Abscheidelösemittel mindestens ein chemisches Lösemittel umfasst, wobei das chemische Lösemittel vorzugsweise eines oder mehrere umfasst, ausgewählt aus der Gruppe bestehend aus einer wässrigen Lösung von 2-Amino-2-Methyl-1-Propanol, tertiärem Amin, so wie Methyldiethanolamin, und Ammoniak.

7. Verfahren nach einem der Ansprüche 1 - 6, wobei das Inkontaktbringen von kohlenstoffdioxidhaltigem Gasstrom mit Abscheidelösemittel bei einer Temperatur von 0 °C oder höher durchgeführt wird.

8. Verfahren nach einem der Ansprüche 1 - 7, wobei jeder der Schritte a) - d) in Anspruch 1 bei einem absoluten Druck von 20 Bar oder mehr und 138 Bar oder weniger durchgeführt wird.

9. Verfahren nach einem der Ansprüche 1 - 8, wobei das reduzierte Kohlenstoffdioxidprodukt oder die reduzierte Kohlenstoffdioxidproduktmischung eines oder mehrere umfasst, ausgewählt aus der Gruppe bestehend aus Kohlenstoffmonoxid, Alkanen, Alkenen, Alkoholen, Carbonsäuren und Salzen davon, so wie Formiaten, Oxalaten und Acetaten, Aldehyden, und Ketonen.

10. Verfahren nach einem der Ansprüche 1 - 9, wobei mindestens ein Salz in einer nicht-wässrigen Lösung zu der kathodischen Kammer und/oder der anodischen Kammer hinzugefügt wird, um die elektrische Leitfähigkeit zu verbessern.

11. Verfahren nach einem der Ansprüche 1 - 9, wobei mindestens ein Salz in einer wässrigen Lösung zu der kathodischen Kammer und/oder der anodischen Kammer hinzugefügt wird, um die elektrische Leitfähigkeit zu verbessern.

12. Verfahren nach einem der Ansprüche 1 - 11, wobei die Kathode einen elektrisch leitenden, metallischen Elektrokatalyten umfasst.

13. Vorrichtung, geeignet zum Durchführen des Verfahrens nach einem der Ansprüche 1 - 12 umfassend:
- eine Absorbereinheit, wobei die Absorbereinheit eingerichtet ist, um einen kohlenstoffdioxidhaltigen Gasstrom unter Druck zu empfangen, und
- eine elektrochemische Zelle, verbunden mit der Absorbereinheit, wobei die elektrochemische Zelle eingerichtet ist, um Kohlenstoffdioxid von einem Abscheidelösemittel elektrochemisch zu reduzieren
- optional eine Separatoreinheit, verbunden mit der elektrochemischen Zelle,
wobei die Absorbereinheit eingerichtet ist, um einen absoluten Druck von 20-200 Bar auszuhalten und darunter zu funktionieren und die elektrochemische Zelle eingerichtet ist, um einen absoluten Druck von 20-138 Bar auszuhalten und darunter zu funktionieren; und
wobei die elektrochemische Zelle mindestens zwei Kammern , getrennt durch einen halbdurchlässigen Separator, umfasst.

14. Vorrichtung nach Anspruch 13, wobei die Absorbereinheit eingerichtet ist, um einen absoluten Druck von 20 Bar oder mehr und 138 Bar oder weniger auszuhalten und darunter zu funktionieren.

15. Vorrichtung nach Anspruch 13 oder 14, wobei die elektrochemische Zelle eine oder mehrere Elektroden umfasst, die erhitzt sind.

## Revendications

1. Procédé de réduction électrochimique de dioxyde de carbone, comprenant les étapes consistant à :
a) mettre en contact un flux gazeux contenant du dioxyde de carbone avec un solvant de capture, en absorbant ainsi le dioxyde de carbone du flux gazeux contenant du dioxyde de carbone pour former un solvant de capture riche en dioxyde de carbone ;
b) introduire au moins une partie du solvant de capture riche en dioxyde de carbone dans un compartiment cathodique d'une cellule électrochimique ;
c) appliquer un potentiel électrique entre une anode et une cathode dans la cellule électrochimique suffisant pour que la cathode réduise du dioxyde de carbone en un produit ou un mélange de produits de dioxyde de carbone réduit dans le solvant de capture riche en dioxyde de carbone, fournissant ainsi un solvant de capture pauvre en dioxyde de carbone ;
d) collecter le produit ou le mélange de produits de dioxyde de carbone réduit et ;
e) facultativement, remettre en circulation au moins une partie du solvant de capture pauvre en dioxyde de carbone vers une unité absorbante,
dans lequel l'anode est séparée de la cathode par un séparateur semi-perméable, formant ainsi un compartiment cathodique et un compartiment anodique, et dans lequel la pression absolue du flux gazeux contenant du dioxyde de carbone est de 20 à 200 bars, et dans lequel la pression absolue dans la cellule électrochimique est de 20 bars ou plus et de 138 bars ou moins.

2. Procédé selon la revendication 1, dans lequel la température dans la cellule électrochimique est de 0 °C ou plus.

3. Procédé selon la revendication 1 ou 2, dans lequel le flux gazeux contenant du dioxyde de carbone de a) est mis en contact avec le solvant de capture dans une unité absorbante, et dans lequel le dioxyde de carbone est sélectivement absorbé par le solvant de capture.

4. Procédé selon l'une quelconque des revendications 1 à 3, dans lequel le solvant de capture comprend au moins un solvant physique, tel qu'au moins un solvant physique aqueux, dans lequel le solvant physique comprend de préférence un ou plusieurs choisis dans le groupe constitué d'éthers diméthyliques de polyéthylèneglycol, de *N*-méthyl-2-pyrrolidone, de méthanol, et de carbonate de propylène.

5. Procédé selon la revendication 4, dans lequel le solvant physique est un mélange de divers éthers diméthyliques de polyéthylèneglycol.

6. Procédé selon l'une quelconque des revendications 1 à 5, dans lequel le solvant de capture comprend au moins un solvant chimique, dans lequel le solvant chimique comprend de préférence un ou plusieurs choisis dans le groupe constitué d'une solution aqueuse de 2-amino-2-méthyl-1-propanol, d'amine tertiaire, telle que de la méthyldiéthanolamine, et d'ammoniaque.

7. Procédé selon l'une quelconque des revendications 1 à 6, dans lequel la mise en contact d'un flux gazeux contenant du dioxyde de carbone avec un solvant de capture est réalisée à une température de 0 °C ou plus.

8. Procédé selon l'une quelconque des revendications 1 à 7, dans lequel chacune des étapes a) à d) de la revendication 1 est réalisée à une pression absolue de 20 bars ou plus et de 138 bars ou moins.

9. Procédé selon l'une quelconque des revendications 1 à 8, dans lequel le produit ou le mélange de produits de dioxyde de carbone réduit comprend un ou plusieurs choisis dans le groupe constitué de monoxyde de carbone, alcanes, alcènes, alcools, acides carboxyliques et sels de ceux-ci, tels que des formates, oxalates et acétates, aldéhydes, et cétones.

10. Procédé selon l'une quelconque des revendications 1 à 9, dans lequel au moins un sel dans une solution non-aqueuse est ajouté au compartiment cathodique et/ou au compartiment anodique pour améliorer la conductivité électrique.

11. Procédé selon l'une quelconque des revendications 1 à 9, dans lequel au moins un sel dans une solution aqueuse est ajouté au compartiment cathodique et/ou au compartiment anodique pour améliorer la conductivité électrique.

12. Procédé selon l'une quelconque des revendications 1 à 11, dans lequel la cathode comprend un électro-catalyseur métallique électriquement conducteur.

13. Appareil, adapté pour effectuer le procédé selon l'une quelconque des revendications 1 à 12, comprenant :
- une unité absorbante, où l'unité absorbante est disposée de manière à recevoir un flux gazeux contenant du dioxyde de carbone sous pression, et
- une cellule électrochimique connectée à l'unité absorbante, où la cellule électrochimique est disposée de manière à réduire électrochimiquement le dioxyde de carbone d'un solvant de capture,
- facultativement, une unité de séparation connectée à la cellule électrochimique,
dans lequel l'unité absorbante est disposée pour faire face et fonctionner à une pression absolue de 20 à 200 bars, et la cellule électrochimique est disposée de manière à faire face et à fonctionner à une pression absolue de 20 à 138 bars, et
dans lequel la cellule électrochimique comprend au moins deux compartiments séparés par un séparateur semi-perméable.

14. Appareil selon la revendication 13, dans lequel l'unité absorbante est disposée pour faire face et fonctionner à une pression absolue de 20 bars ou plus et 138 bars ou moins.

15. Appareil selon la revendication 13 ou 14, dans lequel ladite cellule électrochimique comprend une ou plusieurs électrodes qui sont chauffées.
